# FASCICULE DE BREVET EUROPEEN

(11) **EP 0 416 992 B1**
(45) Date de publication et mention de la délivrance du brevet: **17.03.1993**
(21) Numéro de dépôt: 90402430.4
(22) Date de dépôt: 04.09.1990
(51) Int. Cl.: G01V 1/20

(54) **Antenne hydrophonique linéaire et dispositif électronique de levée d'ambiguité droite-gauche associé à cette antenne**
Lineare hydrophonische Antenne und dazugehörende elektronische Vorrichtung zum Aufheben der links-rechts Zweideutigkeit
Linear hydrophonic antenna and electronic device which resolves left-right ambiguity associated with this antenna

(30) Priorité: 08.09.1989 FR 8911749
(43) Date de publication de la demande: 13.03.1991
(73) Titulaire: THOMSON-CSF, 75008 Paris (FR)
(72) Inventeur: Bertheas, Jean, F-92045 Paris la Défense (FR); Moresco, Gilles, F-92045 Paris la Défense (FR); Dufourcq, Philippe, F-92045 Paris la Défense (FR)
(74) Mandataire: Desperrier, Jean-Louis

(56) Documents cités:
- FR-A- 1 541 829
- GB-A- 1 138 133
- US-A- 3 939 469
- US-A- 4 078 223

## Description

La présente invention se rapporte à une antenne hydrophonique linéaire, constituée de capteurs hydrophoniques omnidirectionnels et acoustiquement transparents. Elle se rapporte également à un dispositif électronique de levée d'ambiguité droite-gauche associé à cette antenne.

Une antenne hydrophonique linéaire est généralement constituée d'un "chapelet" de capteurs hydrophoniques omnidirectionnels contenus dans une gaine remplie d'une huile isolante. Cette gaine contient aussi les modules électroniques associés à ces capteurs, cet ensemble linéaire formant une "flûte", généralement remorquée par un bateau.

Une antenne linéaire de ce type constitue un système sonar passif dont les caractéristiques de directivité ne permettent pas de savoir si l'objet détecté (tel qu'un bâtiment marin ou sous-marin) se trouve à droite ou à gauche, au dessus ou en dessous. Les distances de détection étant élevées (plusieurs kilomètres en général), ceci revient à avoir une ambiguité droite-gauche (ou tribord-babord) qui, pour des raisons évidentes, doit impérativement être levée.

D'une manière générale, on forme plusieurs voies dans plusieurs directions de telle manière que, par exemple, le secteur d'observation soit de l'ordre de 120 degrés. La formation de ces voies s'effectue de manière très classique, par remise en phase des signaux des capteurs hydrophoniques pour une direction donnée.

Cependant, les capteurs hydrophoniques étant omnidirectionnels, il n'est pas possible de savoir à priori si le signal reçu sur une voie correspond à une direction babord ou tribord.

Pour lever, sans dispositif spécialement prévu à cet effet, cette ambiguité droite-gauche, le bateau peut manoeuvrer mais cette méthode très simple constitue un handicap opérationnel rédhibitoire en raison de sa lenteur.

Il est connu de conférer une certaine directivité aux capteurs hydrophoniques en les réalisant sous forme de modules de type "DIFAR" ("Direction Finding And Ranging").

Chaque module hydrophonique est alors formé de quatre capteurs formant deux dipôles orthogonaux. Une antenne hydrophonique linéaire de ce type est décrite dans la demande de Brevet Français n° 88 16 803, déposée par la demanderesse le 20 décembre 1988. Il s'agit d'une antenne modulaire linéaire pour laquelle chaque module hydrophonique comporte deux paires de capteurs hydrophoniques formant deux dipôles orthogonaux, ce module étant associé à des moyens d'identification de la direction des sources d'ondes captées. Chacun de ces modules est alors constitué par un support parallèlèpipédique portant un capteur hydrophonique (capteur surfacique de pression dans cet exemple) sur chacune de ses quatre faces latérales. L'inconvénient d'un tel dispositif est sa complexité, et donc son prix de revient.

L'invention vise à remédier à ces inconvénients, et elle propose à cet effet une antenne hydrophonique linéaire qui, tout en étant de réalisation simple (donc peu onéreuse), permet, grâce à un dispositif électronique associé, une levée d'ambiguité droite-gauche simple et quasi-instantanée. Par ailleurs, cette antenne hydrophonique linéaire possède une excellente navigabilité, et notamment une bonne tenue au roulis. Cette antenne est composée de trois "flûtes", comportant chacune classiquement un "chapelet" de capteurs hydrophoniques omnidirectionnels et acoustiquement transparents. Ces trois flûtes sont structurellement identiques, parallèles l'une à l'autre avec leurs trois extrémités correspondantes situées dans un même plan orthogonal à leur direction axiale commune, et elles sont liées entre elles par un noyau central, qui est rigide au moins dans le plan orthogonal à cette direction axiale, de façon à former, à elles trois et en section dans ce même plan orthogonal, un triangle avantageusement isocèle (et préférentiellement équilatéral).

Les densités des liquides isolants que contiennent ces trois flûtes et dans lesquels sont noyés les capteurs hydrophoniques ainsi que généralement au moins une partie de leurs blocs électroniques associés, sont choisies telles qu'elle soient identiques pour deux des flûtes, tandis que la densité du liquide isolant que contient la troisième flûte est notablement différente de celle relative à ces deux premières flûtes, de telle sorte que ces deux premières flûtes naviguent au même niveau, en procurant à l'ensemble une bonne tenue au roulis.

A cette antenne est associé un dispositif électronique de levée d'ambiguité droite-gauche (ou tribord-babord) qui comporte, outre les moyens classiques d'acquisition des signaux captés :
- des moyens pour former des voies en gisement dans un certain nombre de directions choisies , et
- des moyens pour associer à chaque voie un retard ou un déphasage propre à chaque signal respectivement capté par chacune des trois flûtes, ces 3 retards ou ces 3 déphasages étant déterminés de manière à donner pour cette voie un signal résultant qui, après application de ces retards ou déphasages respectifs et sommations, soit nul s'il provient d'un côté (tribord par exemple) et non nul s'il provient de l'autre côté (babord dans cet exemple).

Selon un cas préférentiel, les trois flûtes sont disposées en triangle équilatéral, et l'entraxe entre deux flûtes est sensiblement égal au tiers de la longueur d'onde qui correspond à la fréquence centrale reçue.

Les trois déphasages à appliquer pour une voie correspondant à une direction donnée sont alors :
- de 0 degrés pour la flûte médiane,
- de 120° - 60° sin G, où G est l'angle de gisement, pour la flûte qui est censée être la plus éloignée de l'objet, lui même censé se trouver dans cette direction, et
- de -(120° -60°.sinG) pour la troisième flûte, c'est à dire pour la flûte qui est censée être la plus rapprochée de cet objet.

Bien entendu, en cas de convention inverse, il conviendrait simplement d'inverser les signes respectifs de ces deux derniers déphasages.

Dans le cas précité (entraxe égal au tiers de la longueur d'onde reçue), les déphasages dûs aux différences de trajet par rapport à celui de la flûte médiane sont de 60 degrés de part et d'autre de cette dernière. Dans le cas général où cette différence de trajet correspond à un angle A, les déphasages à appliquer sont de 0 degrés pour la flûte médiane et de plus ou moins (120° - A.sin G) pour les deux autres flûtes.

Avantageusement par ailleurs, ce même dispositif électronique comporte des moyens de correction de ces retards ou déphasages en fonction des angles de roulis et/ou de torsion de l'antenne qui sont mesurés par des capteurs placés sur l'antenne hydrophonique.

De toute façon, l'invention sera bien comprise, et ses avantages et autres caractéristiques ressortiront, lors de la description suivante d'un exemple non limitatif de réalisation de cette antenne hydrophonique linéaire, et de son dispositif électronique associé de mesure avec levée d'ambiguité droite-gauche, en référence au dessin schématique annexé dans lequel :
- Figure 1 est une vue en perspective de cette antenne hydrophonique linéaire ;
- Figure 2 est une vue en coupe transversale des trois éléments qui, assemblés, forment l'antenne de la figure 1
- Figures 3 à 5 sont des schémas explicatifs du principe de réalisation, selon l'invention, de la levée d'ambiguité droite-gauche ;
- Figure 6 est un schéma synoptique du dispositif électronique de mesure et de levée d'ambiguité associé à cette antenne ; et
- Figure 7 est une vue similaire à la figure 2 et montrant une variante de réalisation mécanique de cette antenne.
- Figure 8 est un graphique en trois dimensions donnant le gain en site et en gisement pour une voie en gisement 0° d'un prototype d'une antenne selon l'invention.

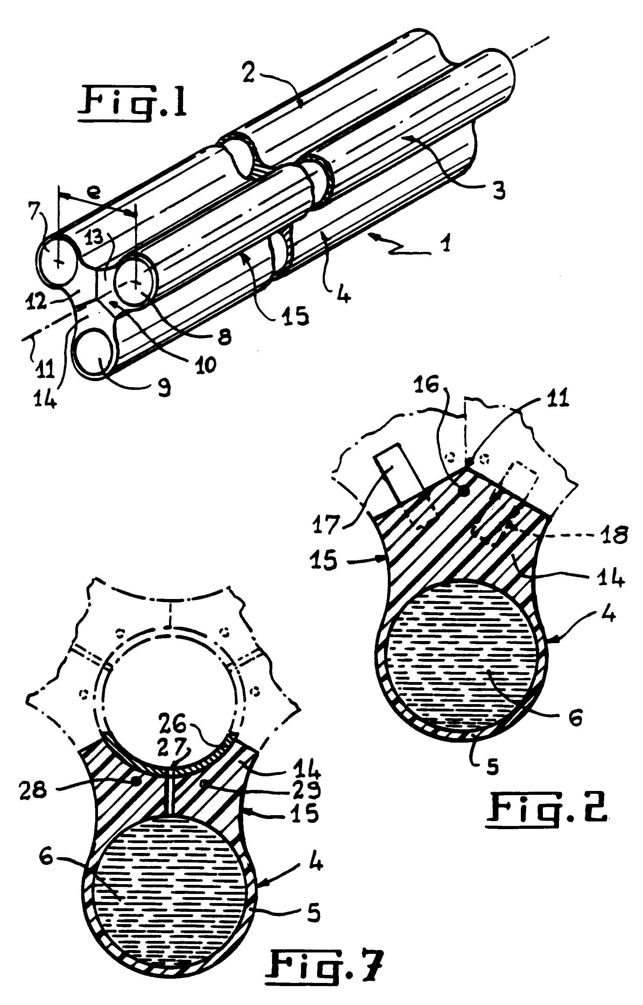

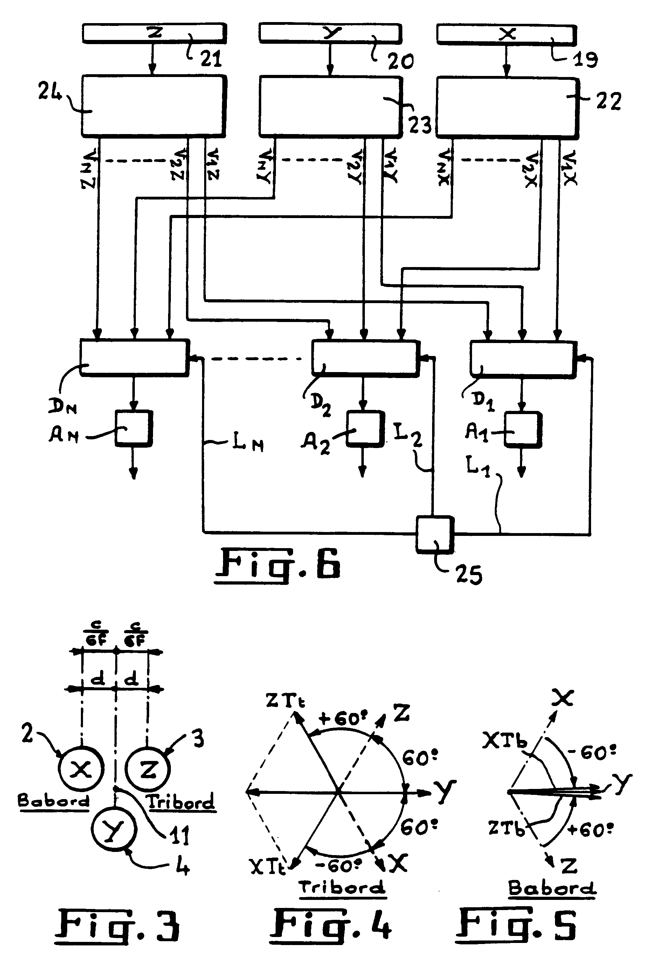

En se référant tout d'abord aux figures 1 et 2, cette antenne hydrophonique linéaire 1 se compose de trois "flûtes" classiques 2, 3, 4, qui comportent chacune traditionnellement un "chapelet" de capteurs hydrophoniques (ou hydrophones) omnidirectionnels et acoustiquement transparents.

Chaque flûte comporte une gaine étanche 5 qui est remplie d'une huile paraffinique isolante 6. Les capteurs hydrophoniques non représentés sont classiquement maintenus dans cette gaine par des centreurs, et cette gaine contient également les différents blocs électroniques associés, dont les préamplificateurs qui sont placés entre les capteurs, et l'électronique d'acquisition et de traitement des signaux qui est placée soit au centre de la flûte, soit dans un tronçon spécial situé en tête ou en queue de celle-ci.

Les trois flûtes 2, 3 ,4, sont structurellement identiques et elles sont placées parallèlement l'une à l'autre, en triangle équilatéral et sans décalage axial d'une flûte par rapport à l'autre, ce qui revient à dire que leurs trois extrémités correspondantes 7, 8, 9 (situées d'un même côté de l'antenne 1) sont situées dans un même plan orthogonal à l'axe longitudinal 11 de l'antenne 1. Dans ce but, elles sont liées par un noyau central 10 qui est rigide dans le plan orthogonal à l'axe longitudinal 11 de l'antenne et qui est, dans cet exemple, en un polyuréthanne dont le produit (densité x vitesse) est adapté à celui de l'eau de mer.

L'entraxe e entre flûtes (c'est à dire la valeur du côté du triangle équilatéral) n'est préférentiellement pas quelconque, mais il est pratiquement égal au tiers de la longueur d'onde qui correspond à la fréquence centrale f reçue, soit :
e = **c/3f** où **c** est la vitesse du son dans l'eau
Cette fréquence centrale de fonctionnement f est :
. soit la fréquence centrale de la bande d'écoute passive pour un système sonar entièrement passif ;
. soit la fréquence d'émission pour un système sonar comportant une fonction d'activisation (l'antenne 1 constituant alors l'antenne passive d'un sonar actif).

Les densités des huiles paraffiniques 6 que contiennent chacune des trois flûtes 2, 3, 4 ne sont pas quelconques non plus, mais elles sont choisies pour que l'antenne 1 présente une bonne tenue au roulis, avec une flottabilité à peu près neutre. Dans cet exemple, l'antenne 1 est prévue pour naviguer avec la flûte 4 orientée vers le bas (c'est à dire vers le fond de la mer) et, dans ce but, cette dernière est remplie d'une huile paraffinique de forte densité (proche de 1,5 par exemple), tandis que les deux flûtes supérieures 2 et 3, destinées à naviguer dans un même plan horizontal, sont remplies d'une huile paraffinique de faible densité (proche de 0,8 par exemple).Ainsi, l'ensemble est soumis à deux forces verticales opposées, ce qui permet d'obtenir une stabilisation de la navigation, notamment en roulis.

Le noyau central 10 est constitué par l'assemblage de trois profilés 12, 13, 14 dont l'un d'eux, 14, est représenté en détails et en coupe transversale à la figure 2. Ils ont conformés pour présenter,entre chaque paire de flûtes (4 et 3 par exemple), une partie creuse 15 de forme concave, ce qui a pour avantage de limiter au maximum l'encombrement de l'ensemble, et donc son poids dans l'air, et de retarder l'apparition d'un écoulement turbulent de l'eau le long des parois.

Comme on le voit sur la figure 3, chaque profilé 14 constitue également, d'un même bloc, la gaine 5 de la flûte 4 correspondante.

Dans la partie massive de profilé 14, et près de l'axe 11 de l'antenne, est noyé un câble 16 de reprise d'efforts (au lieu d'être noyé dans la gaine comme ce serait le cas pour une seule flûte selon l'art antérieur).

Les trois profilés sont assemblés, pour former le noyau central 10, par simple collage résistant à l'eau. Par ailleurs, un dispositif de solidarisation à tenon 17 et mortaise 18 est en outre avantageusement prévu pour le profilé inférieur 14 afin d'obtenir une bonne rigidité en torsion, le tenon 17 étant métallique.

Dans cette version, où le noyau 10 est en polyuréthanne, l'antenne 1 est prévue pour présenter, en flexion, une souplesse suffisante pour permettre son enroulement sur son touret (lors du stockage). Les trois câbles 16 de reprise d'efforts sont alors des joncs en fibre de verre ou de carbone, garantissant l'absence d'ondulations lors de la navigation et limitant l'allongement longitudinal.

Cette antenne "tri-flûte" 1 est conçue pour permettre, par traitement électronique, une levée d'ambiguité babord-tribord, dont le principe mathématique de cette levée d'ambiguité est maintenant explicité à l'aide des figures 3 à 5.

La figure 3 représente schématiquement les trois flûtes 2, 3, 4 dans leur position de navigation de la figure 1, c'est à dire avec les flûtes 2 et 3 vers le haut et dans un même plan horizontal, et la flûte "médiane" 4 dirigée vers le bas, c'est à dire vers le fond de la mer.

Pour cette application, l'objet à détecter est supposé situé dans le plan de gisement 90° (plan orthogonal à l'axe 11 de l'antenne) et son site est par exemple de 0 degrés (c'est à dire qu'il se trouve, comme c'est le cas pour un navire, dans le même plan horizontal que l'antenne). Le roulis est par ailleurs supposé nul pour la clarté de l'exposé.

Les signaux (vectoriels) reçus respectivement par les flûtes 2, 3, et 4 sont respectivement désignés par les références X, Z et Y, sur ces figures 3 à 5.

Sur la figure 3, "tribord" est bien entendu à droite et "babord" à gauche. L'objet à détecter (par exemple un bateau) est supposé se trouver à babord, ce que l'antenne 1, étant omnidirectionnelle, est à priori incapable de déterminer .

On a vu précédemment que l'entraxe **e** (de la figure 1) entre flûtes est choisi égal à **c/3f**,f étant la fréquence centrale reçue, ce qui veut dire qu'en projection dans le plan horizontal, les distances d entre les axes des flûtes 2 et 4 d'une part, et 3 et 4 d'autre part, sont égales à **c/6f**, c'est à dire au sixième de la longueur d'onde. Il s'ensuit, comme représenté aux figures 4 et 5, que le signal Y reçu par la flûte médiane 4 étant pris comme origine des phases, les signaux X et Z reçus sont déphasés par rapport à celui-ci d'un angle d'avance ou de retard (selon le cas) qui correspond à la différence de parcours d, c'est à dire, dans ce cas où d = **c/6f**, d'un angle de 60 degrés :
. à babord (figure 5) le vecteur X est en avance de 60 degrés sur le vecteur Y (puisque, l'objet étant bien à babord, le signal reçu par la flûte 2 est obtenu avant celui reçu par la flûte médiane 4), tandis que le vecteur Z est en retard de 60 degrés sur le vecteur Y ;
. à tribord (figure 4), c'est exactement le contraire (puisque l'objet se trouve en réalité à babord), de sorte que le vecteur X est en retard de 60 degrés sur le vecteur Y tandis que le vecteur Z est en avance de 60 degrés sur ce vecteur Y.

Bien entendu, l'objet étant à grande distance de l'antenne 1, les amplitudes des signaux respectivement reçus, c'est à dire les intensités respectives des vecteurs X, Y, Z, sont pratiquement égales. Si les signaux Z et X sont déphasés respectivement de +60 degrés et de -60 degrés, on obtient pour un signal venant de tribord trois vecteurs Y, ZTt, et XTt qui sont d'égale amplitude et à 120 degrés l'un de l'autre, et par suite la résultante est nulle; pour un signal venant de babord,on obtient trois vecteurs superposés Y, ZTb, YTb dont la résultante forme un signal maximal, égal à trois fois l'intensité de ces vecteurs.

Le principe de l'invention consiste à appliquer ce traitement sur les voies en gisement formées à partir des 3 flûtes.

Pour les voies inclinées, dont le gisement est différent de 90 degrés, les déphasages à appliquer aux signaux de voies des flûtes 2 et 3 correspondent aux trajets projetés sur l'axe de gisement 90 degrés : pour un gisement d'angle G, ces déphasages valent
± (120° - 60°.sin G).
Comme on perd en sensibilité au fur et à mesure que l'on se rapproche de l'axe de l'antenne, on ne forme en pratique des voies que dans les directions qui correspondent à des gisements compris entre 30 et 150 degrés, soit sur un cône de 120 degrés. De toute façon, l'intérêt fonctionnel d'une distinction babord-tribord près de l'axe de l'antenne est faible.

Le raisonnement précédent est fait en l'absence de roulis. Comme on le verra ci-après, le dispositif électronique associé à cette antenne tri-flûte permet fort heureusement de corriger les valeurs des déphasages précités en fonction des angles de roulis et/ou de torsion de l'antenne.

Suivant une variante, la distance **e** peut être inférieure ou supérieure à **c/6f**. Dans ce cas, on perd bien évidemment en sensibilité par rapport au cas optimal où : **e=c/3f**.

La figure 6 représente le synoptique du dispositif électronique associé à l'antenne 1 permettant la levée d'ambiguité droite-gauche compensée en roulis.

Sur cette figure 6, les références 19, 20 et 21 désignent respectivement les blocs d'acquisition des signaux captés respectivement par les flûtes 2, 4 et 3.

Les signaux numérisés X, Y, Z en sortie de ces blocs 19, 20, 21 sont appliqués respectivement aux blocs 22, 23, 24 de formation de voies. Dans une direction donnée, on forme une première voie dont les signaux de mesure sortent respectivement du bloc 22 en V1X, du bloc 23 en V1Y, et du bloc 24 en V1Z. Pour la direction adjacente on forme une deuxième voie dont les signaux de mesure sortent en V2X, V2Y, et V2Z, et ainsi de suite. Les voies sont formées de façon classique à partir des signaux issus des hydrophones, pour couvrir par exemple un secteur de 120 degrés autour de l'axe de l'antenne tri-flûte.

Les trois signaux numérisés V1X, V1Y, V1Z qui correspondent à la première voie précitée sont tous trois appliqués à un bloc D1 comportant les moyens de déphasage ou de retard à appliquer aux trois signaux. De même, les trois signaux V2X, V2Y, V2Z sont tous trois appliqués à un deuxième bloc D2 de déphasage ou retard, et ainsi de suite, les signaux VNX, VNY, VNZ étant appliqués à un Nième bloc DN de déphasage ou retard, ces déphasages ou retards étant élaborés comme expliqué ci-dessus (en référence aux figures 3 à 5), et étant corrigés des valeurs des angles de roulis et de torsion mesurés par au moins deux capteurs (bloc 25) situés aux deux extrémités de l'antenne tri-flûte. Pour cela les valeurs angulaires correspondantes sont introduites dans les blocs logiques D1 à DN par les liaisons L1 à LN.

Ces signaux numériques, déphasés ou retardés dans les blocs logiques D1 à DN, sont ensuite additionnés (selon le principe décrit précédemment en référence aux figures 4 et 5) dans les additionneurs respectifs A1 à AN, pour en sortir finalement des valeurs numériques V1 à VN qui sont appliquées ensuite à un dispositif classique d'analyse et de traitement (non représenté), tous ces traitements étant simultanés dans toutes les directions.

Comme il va de soi, l'invention n'est pas limitée à l'exemple de réalisation qui vient d'être décrit, et bien d'autres variantes sont possibles :
Les trois flûtes pourraient ne pas être placées suivant un triangle équilatéral pourvu qu'il soit cependant isocèle. Les densités des huiles paraffiniques 6 pourraient être choisies pour que la navigation se fasse avec une flûte pointant vers le haut, et les deux autres naviguant dans un même plan horizontal, donc sous cette première flûte : dans un tel cas, elle contiendrait une huile paraffinique de densité supérieure à celle remplissant cette première flûte.

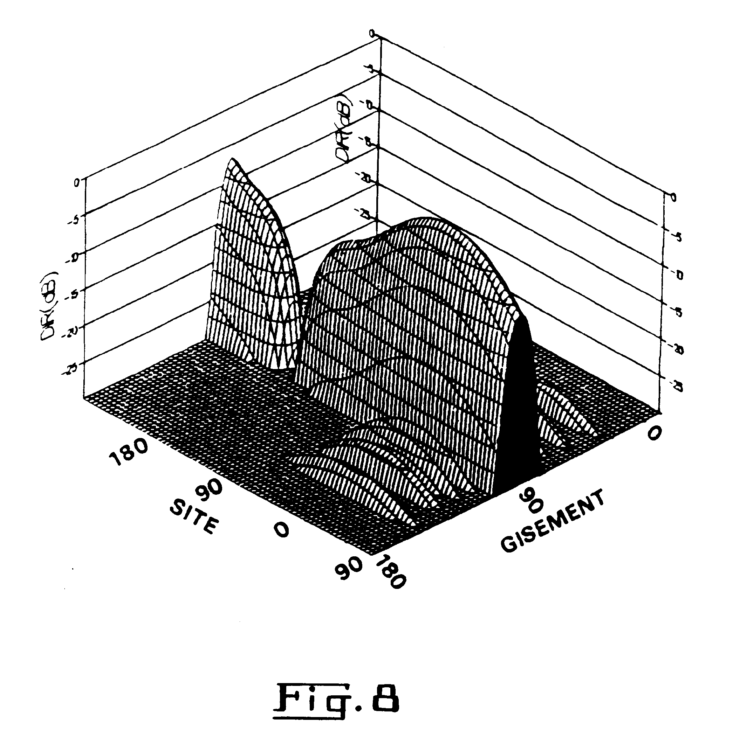

Les creux concaves 15 du noyau central 10 ne sont qu'optionnels, ce même noyau central pouvant par ailleurs être réalisé d'autre façon. A titre d'exemple, la figure 7 représente une variante des profilés tels que 14, qui est alors tel qu'il laisse la place à un tube central rigide 26, en métal ou en PVC rigide, qui forme barre anti-torsion. Dans ce tube 26, on dispose alors d'un espace dans lequel peuvent être logés les blocs électroniques, ou au moins certains d'entre eux, des perçages 27 étant alors prévus pour permettre le passage étanche des connexions, et des câbles de reprise d'efforts 28, 29 étant également prévus. Les trois profilés tels que 14 sont fixés sur le tube 26 soit par collage, soit par vissage (ce qui permet alors de les désolidariser en cas de besoin).

Dans cette variante selon la figure 7, l'antenne tri-flûte est entièrement rigide, en flexion et en torsion, ce qui est un avantage. En revanche, elle ne peut pas être recourbée pour permettre son enroulement sur un touret, ce qui limite sa longueur en raison des impératifs d'encombrement pour le stockage.

Selon un autre exemple de variante possible, le noyau central 10 peut être réalisé à part, formant une pièce soit massive, soit évidée au centre. Les flûtes 2, 3, 4 réalisées chacune à part avec leur gaine et éventuellement une petite partie moulée, sont ensuite rapportées sur le profilé auxquelles elles sont par exemple solidarisées par collage.

Les moyens électroniques selon la figure 6 sont aussi susceptibles de présenter des variantes : par exemple les déphasages ou retards peuvent être appliqués en sortie des blocs 19 à 21, c'est à dire sur chaque signal d'hydrophone avant formation des voies par les blocs 22 à 24.

A titre d'exemple numérique, un prototype a été réalisé par la demanderesse avec les caractéristiques suivantes :
. fréquence centrale de fonctionnement : 3,5 kilohertz
. nombre total d'hydrophones : 48 (soit 16 par flûte )
. pondération de Chebychev
. longueur de l'antenne tri-flûte : 3,20 mètres
. distance entre flûtes horizontales : 0,143 mètres
. distance entre l'axe de la flûte inférieure et l'axe de l'antenne : 0,124 mètres

Il a été relevé avec ce dispositif la courbe de directivité pour la voie en gisement 0° représentée en figure 8, qui montre une excellente qualité de lever de doute babord-tribord. Il a été observé également une réjection supérieure à 10 dB sur tout l'espace tribord entre les sites 90 degrés et 240 degrés.

En ce qui concerne la correction en roulis et torsion, ce dispositif réalise, pour des angles de roulis et/ou de torsion inférieurs à plus ou moins 10 degrés, une levée d'ambiguité babord-tribord avec une perte en sensibilité inférieure à 1 dB. Ce résultat inattendu marque la supériorité du tri-flûte car, grâce à l'équilibrage mécanique obtenu par la flûte inférieure (remplie d'un fluide lourd), les rotations restent sensiblement inférieures à plus ou moins 10 degrés.

## Revendications

1. Antenne hydrophonique linéaire (1), caractérisée en ce qu'elle est composée de trois "flûtes" (2, 3, 4) comportant chacune classiquement un "chapelet" de capteurs hydrophoniques, ces capteurs hydrophoniques étant omnidirectionnels et acoustiquement transparents, en ce que ces trois flûtes (2, 3, 4) sont structurellement identiques, parallèles entre elles sans décalage axial relatif et liées entre elles par un noyau central (10), qui est rigide au moins dans le plan orthogonal à l'axe (11) de l'antenne (1), de façon à former à elles trois et en section dans ce plan orthogonal, un triangle isocèle, les densités de ces trois flûtes (2, 3, 4) étant identiques par deux de celles-ci et notablement différentes pour la troisième, de telle sorte que cette dernière soit prévue pour pointer, en navigation, soit vers le haut, soit vers le bas, et les deux autres pour naviguer, au roulis près, sensiblement au même niveau horizontal.

2. Antenne hydrophonique selon la revendication 1, caractérisée en ce que les trois flûtes (2, 3, 4) sont déposées selon un triangle équilatéral.

3. Antenne hydrophonique selon la revendication 1 ou la revendication 2, caractérisée en ce que le noyau central (10) est conformé pour présenter un creux (15), de forme concave, entre chaque paire de flûtes (2 et 3, 2 et 4, 3 et 4).

4. Antenne hydrophonique selon l'une des revendications 1 à 3, caractérisée en ce que le noyau central (10) forme une partie massive dans laquelle sont noyés un ou plusieurs câbles (16, 28, 29) de reprise d'efforts.

5. Antenne hydrophonique selon l'une des revendications 1 à 4, caractérisée en ce que le noyau central (10) est constitué par un assemblage de trois profilés sensiblement identiques (12, 13, 14).

6. Antenne hydrophonique selon la revendication 5, caractérisée en ce que chacun de ces profilés (12, 13, 14) comprend également, d'un même bloc, la gaine (5) de la flûte correspondante (2, 3, 4).

7. Antenne hydrophonique selon l'une des revendications 1 à 6, caractérisée en ce que le noyau central (10) est rapporté sur un tube central rigide (26).

8. Antenne hydrophonique selon l'une des revendications 1 à 5, caractérisée en ce que le noyau (10) est réalisé à part et en ce que les trois flûtes (2, 3, 4) sont rapportées, avec leurs gaines (5), sur ce noyau.

9. Antenne hydrophonique selon l'une des revendications 1 à 8, caractérisée en ce que l'une des flûtes (4) contient un liquide isolant (6) dont la densité est de l'ordre de 1,5 , tandis que les deux autres (2, 3) contiennent un liquide isolant dont la densité est de l'ordre de 0,8.

10. Antenne hydrophonique selon l'une des revendications 1 à 9, caractérisée en ce que l'entraxe (e) entre les deux flûtes (2, 3) prévues pour naviguer au même niveau est de l'ordre du tiers de la longueur d'onde de la fréquence centrale (f) fonctionnement de cette antenne.

11. Dispositif électronique de levée d'ambiguité droite-gauche apte à être associé à une antenne hydrophonique selon l'une des revendications 1 à 10, ce dispositif comprenant classiquement des moyens (19, 20, 21) d'acquisition des signaux (X, Y, Z) captés par les hydrophones des trois flûtes (2, 4, 3), caractérisé en ce qu'il comporte en outre :
. des moyens (22, 23, 24) pour former des voies dans un certain nombre (N) de directions choisies;
. des moyens (D1, D2,...,DN) pour associer à chaque groupe de trois signaux de voies (V1X, V1Y, V1Z, puis V2X, V2Y, V2Z..., puis VNX, VNY, VNZ) trois retards ou trois déphasages; et
. des moyens (A₁,A₂,...,A_{N}), pour additionner les groupes des trois signaux ainsi traités fournissant N sigaux de voie (V₁ ... V_{N}).

12. Dispositif électronique selon la revendication 11, caractérisé en ce que ces retards ou déphasages sont déterminés pour que la directivité de chaque signal de voie présente un zéro, soit à babord, soit à tribord.

13. Dispositif électronique selon l'une des revendications 11 ou 12, caractérisé en ce que les déphasages ou retards appliqués ont pour valeur 0° pour la flûte médiane (4), et ± (120° - A.sin G) pour les deux autres flûtes (2, 3), A étant la phase qui correspond à la différence (d) de trajet entre chacune de ces deux flûtes (2, 3) et la flûte médiane (4), et G étant l'angle de gisement de la voie considérée.

14. Dispositif électronique selon l'une des revendications 11 à 13, caractérisé en ce qu'il comporte en outre des moyens (25, L1 à LN) de correction de ces retards ou déphasages en fonction des angles de roulis et/ou de torsion de l'antenne (1).

15. Dispositif selon l'une des revendications 11 à 14, caractérisé en ce que les signaux de sortie (V1, V2...VN) relevés après traitement sont appliqués à un dispositif d'analyse et de traitement de ceux-ci pour la détection finale de l'objet.

16. Dispositif selon l'une des revendications 11 à 15, caractérisé en ce que les retards ou déphasages sont réalisés au niveau des signaux d'hydrophones.

## Patentansprüche

1. Lineare Unterwasserantenne (1), **dadurch gekennzeichnet,** daß sie aus drei "Flöten" (2, 3, 4) zusammengesetzt ist, die üblicherweise jeweils eine "Kette" von Unterwasserschallempfängern enthalten, wobei diese Unterwasserschallempfänger omnidirektionell und akustisch transparent sind, daß diese drei Flöten (2, 3, 4) strukturell identisch, ohne relative axiale Verschiebung parallel zueinander und miteinander durch ein zentrales Kernstück (10) verbunden sind, das zumindest in der zur Achse (11) der Antenne (1) senkrechten Ebene starr ist, so daß mit diesen drei und im querschnitt in dieser senkrechten Ebene ein gleichschenkliges Dreieck gebildet wird, wobei die Dichten von zwei dieser drei Flöten (2, 3, 4) identisch und von jener der dritten beträchtlich verschieden sind, so daß die letztere dafür vorgesehen ist, beim Navigieren entweder nach oben oder nach unten zu zeigen, und die zwei anderen, abgesehen von einer Rollbewegung, zum Navigieren im wesentlichen in derselben horizontalen Ebene vorgesehen sind.

2. Unterwasserantenne gemäß dem Anspruch 1, dadurch gekennzeichnet, daß die drei Flöten (2, 3, 4) gemäß einem gleichseitigen Dreieck angeordnet sind.

3. Unterwasserantenne gemäß dem Anspruch 1 oder dem Anspruch 2, dadurch gekennzeichnet, daß das Kernstück (10) so ausgebildet ist, daß es ein Kreuz (15) von konkaver Form zwischen jedem Paar von Flöten (2 und 3, 2 und 4, 3 und 4) bildet.

4. Unterwasserantenne gemäß einem der Ansprüche 1 bis 3, dadurch gekennzeichnet daß das Kernstück (10) ein massives Teil bildet, in das ein oder mehrere Seile (16, 28, 29) zur Aufnahme von Belastungen eingelassen sind.

5. Unterwasserantenne gemäß einem der Ansprüche 1 bis 4, dadurch gekennzeichnet, daß das Kernstück (10) durch eine Anordnung von drei im wesentlichen identischen Profilstählen (12, 13, 14) gebildet wird.

6. Unterwasserantenne gemäß dem Anspruch 5, dadurch gekennzeichnet, daß jeder dieser Profilstähle (12, 13, 14) einstückig auch das Hüllrohr (5) der entsprechenden Flöte (2, 3, 4) enthält.

7. Unterwasserantenne gemäß einem der Ansprüche 1 bis 6, dadurch gekennzeichnet, daß das Kernstück (10) an einem zentralen starren Rohr (26) angebracht ist.

8. Unterwasserantenne gemäß einem der Ansprüche 1 bis 5, dadurch gekennzeichnet, daß das Kernstück (10) getrennt realisiert wird und daß die drei Flöten (2, 3, 4) mit ihren Hüllrohren (5) an dieses Kernstück angebracht sind.

9. Unterwasserantenne gemäß einem der Ansprüche 1 bis 8, dadurch gekennzeichnet, daß eine der Flöten (4) eine isolierende Flüssigkeit (6) enthält, deren Dichte in der Größenordnung von 1,5 liegt, während die anderen zwei (2, 3) eine isolierende Flüssigkeit enthalten, deren Dichte in der Größenordnung von 0,8 liegt.

10. Unterwasserantenne gemäß einem der Ansprüche 1 bis 9, dadurch gekennzeichnet, daß der Achsabstand (e) zwischen den beiden Flöten (2, 3), die für die Steuerung in derselben Ebene vorgesehen sind, in der Größenordnung von einem Drittel der Wellenlänge der Betriebsmittenfrequenz (f) dieser Antenne liegt.

11. Elektronikschaltung zur Beseitigung der Rechts-Links-Unbestimmtheit , die sich zum Anschluß an eine Unterwasserantenne gemäß einem der Ansprüche 1 bis 10 eignet, wobei diese Schaltung üblicherweise Mittel (19, 20, 21) zum Erfassen der Signale (X, Y, Z) enthält, die von den Hydrophonen der drei Flöten (2, 4, 3) empfangen werden, **dadurch gekennzeichnet,** daß sie außerdem ausgestattet ist mit:
- Mitteln (22, 23, 24) zum Bilden von Kanälen für eine bestimmte Anzahl (N) von ausgewählten Richtungen;
- Mitteln (D1, D2, ..., DN), um jede Gruppe von drei Kanalsignalen (V1X, V1Y, V1Z, dann V2X, V2Y, V2Z..., dann VNX, VNY, VNZ) mit drei Verzögerungen oder drei Phasenverschiebungen zu versehen; und
- Mitteln (A₁,A₂,...,A_{N}) zur Addition der Gruppen mit den drei Signalen, die so verarbeitet N Kanalsignale (V₁ ... V_{N}) liefern.

12. Elektronikschaltung gemäß dem Anspruch 11, dadurch gekennzeichnet, daß diese Verzögerungen oder Phasenverschiebungen festgestellt werden, damit die Richtcharakteristik jedes Kanalsignals entweder an der Backbordseite oder der Steuerbordseite eine Nullstelle aufweist.

13. Elektronikschaltung gemäß einem der Ansprüche 11 oder 12, dadurch gekennzeichnet, daß die verwendeten Phasenverschiebungen oder Verzögerungen für die mittlere Flöte (4) 0° und für die zwei anderen Flöten (2, 3) ±(120° - A*sin G) betragen, wobei A die Phase ist, die der Wegdifferenz (d) zwischen jeder der zwei Flöten (2, 3) und der mittleren Flöte (4) entspricht und G der Peilwinkel des betrachteten Kanals ist.

14. Elektronikschaltung gemäß einem der Ansprüche 11 bis 13, dadurch gekennzeichnet, daß sie außerdem Mittel (25, L1 bis LN) zur von den Roll- und/oder Verdrehungswinkeln der Antenne (1) abhängigen Korrektur dieser Verzögerungen oder Phasenverschiebungen enthält.

15. Schaltung gemäß einem der Ansprüche 11 bis 14, dadurch gekennzeichnet, daß die nach Verarbeitung aufgenommenen Ausgangssignale (V1, V2 ... VN) einer Schaltung zur Analyse und Verarbeitung derselben für die endgültige Ortung des Objekts zugeführt werden.

16. Schaltung gemäß einem der Ansprüche 11 bis 15, dadurch gekennzeichnet, daß die Verzögerungen oder Phasenverschiebungen auf der Ebene der Hydrophonsignale realisiert werden.

## Claims

1. Linear hydrophone antenna (1), characterised in that it is composed of three "flutes" (2, 3, 4) each conventionally including a "string" of hydrophone sensors, these hydrophone sensors being omnidirectional and acoustically transparent, in that these three flutes (2, 3, 4) are structurally identical, mutually parallel without relative axial offset and linked together by a central core (10), which is rigid at least in the plane orthogonal to the axis (11) of the antenna (1), so that the three form, in cross-section in this orthogonal plane, an isosceles triangle, the densities of these three flutes (2, 3, 4) being identical for two of them and differing notably for the third, so that the latter is devised for pointing, during navigation, either upwards, or downwards, and the other two for navigating, to within roll, substantially at the same horizontal level.

2. Hydrophone antenna according to Claim 1, characterised in that the three flutes (2, 3, 4) are laid in an equilateral triangle.

3. Hydrophone antenna according to Claim 1 or Claim 2, characterised in that the central core (10) is shaped to have a hollow (15), of concave form, between each pair of flutes (2 and 3, 2 and 4, 3 and 4).

4. Hydrophone antenna according to one of Claims 1 to 3, characterised in that the central core (10) forms a solid part in which are embedded one or more load take-up cables (16, 28, 29).

5. Hydrophone antenna according to one of Claims 1 to 4, characterised in that the central core (10) is constructed by assembling three substantially identical members (12, 13, 14).

6. Hydrophone antenna according to Claim 5, characterised in that each of these members (12, 13, 14) also comprises, as one unit, the armour (5) of the corresponding flute (2, 3, 4).

7. Hydrophone antenna according to one of Claims 1 to 6, characterised in that the central core (10) is fitted onto a rigid central tube (26).

8. Hydrophone antenna according to one of Claims 1 to 5, characterised in that the core (10) is made separately and in that the three flutes (2, 3, 4) are fitted, with their armours (5), onto this core.

9. Hydrophone antenna according to one of Claims 1 to 8, characterised in that one of the flutes (4) contains an insulating liquid (6) whose specific gravity is of the order of 1.5, whereas the other two (2, 3) contain an insulating liquid whose specific gravity is of the order of 0.8.

10. Hydrophone antenna according to one of Claims 1 to 9, characterised in that the axial spacing (e) between the two flutes (2, 3) devised for navigating at the same level is of the order of a third of the wavelength of the central operating frequency (f) of this antenna.

11. Electronic device for removing right-left ambiguity, capable of being associated with a hydrophone antenna according to one of Claims 1 to 10, this device conventionally comprising means (19, 20, 21) of capturing signals (X, Y, Z) picked up by the hydrophones of the three flutes (2, 4, 3), characterised in that it further includes:
. means (22, 23, 24) for forming channels in a number (N) of chosen directions;
. means (D1, D2, ...,DN) for associating, with each group of three channel signals (V1X, V1Y, V1Z, then V2X, V2Y, V2Z..., then VNX, VNY, VNZ), three delays or three phase shifts; and
. means (A₁, A₂, ...,A_{N}), of adding up the groups of three signals thus processed providing N channel signals (V₁ ... V_{N}).

12. Electronic device according to Claim 11, characterised in that these delays or phase shifts are determined so that the directivity of each channel signal exhibits a zero, either on the port side or on the starboard side.

13. Electronic device according to one of Claims 11 or 12, characterised in that the applied phase shifts or delays have the value 0° for the middle flute (4), and ± (120° - A.sin G) for the other two flutes (2, 3), A being the phase which corresponds to the path difference (d) between each of these two flutes (2, 3) and the middle flute (4), and G being the bearing angle of the relevant channel.

14. Electronic device according to one of Claims 11 to 13, characterised in that it further includes means (25, L1 to LN) of correcting these delays or phase shifts as a function of the angles of roll and/or of torsion of the antenna (1).

15. Device according to one of Claims 11 to 14, characterised in that the output signals (V1, V2...VN) plotted after processing are applied to a device for analysing and processing them for final detection of the object.

16. Device according to one of Claims 11 to 15, characterised in that the delays or phase shifts are produced at the level of the hydrophone signals.
